# EUROPÄISCHE PATENTSCHRIFT

(11) **EP 1 316 466 B1**
(45) Veröffentlichungstag und Bekanntmachung des Hinweises auf die Patenterteilung: **30.01.2008**
(21) Anmeldenummer: 02023168.4
(22) Anmeldetag: 16.10.2002
(51) Int. Cl.: B60N 2/08

(54) **Arretiervorrichtung mit mehreren Sperrstiften**
Locking device with a plurality of stop pins
Dispositif d'arrêt avec plusieurs goupilles de blocage

(30) Priorität: 28.11.2001 DE 10158145; 17.01.2002 DE 10201581; 14.09.2002 DE 10242829
(43) Veröffentlichungstag der Anmeldung: 04.06.2003
(73) Patentinhaber: C.Rob. Hammerstein GmbH & Co.KG, 42699 Solingen (DE)
(72) Erfinder: Kautzner, Klaus, 40724 Hilden (DE); Frohnhaus, Ernst-Reiner, 42653 Solingen (DE)
(74) Vertreter: Bauer, Wulf

(56) Entgegenhaltungen:
- EP-A- 0 408 932
- DE-A- 2 729 770
- DE-A- 4 444 075
- DE-A- 19 709 149
- DE-U- 29 910 720

## Beschreibung

Die Erfindung bezieht sich auf eine Arretiereinrichtung einer Längsverstellvorrichtung eines Kraftfahrzeugsitzes nach dem Oberbegriff des Patentanspruchs 1.

Eine derartige Arretiereinrichtung ist aus der DE 44 44075 A1 vorbekannt. Zum Stand der Technik wird weiterhin auf DE 197 09 149 A1, EP 498 932 B sowie DE 27 29 770 C verwiesen. Derartige Arretiereinrichtungen werden auch als Mehrstiftarretiereinrichtungen bezeichnet. Sie ermöglichen eine feinstufige Längsverstellung. In blockierter Stellung ist ein Sperrstift in Anlage an einem Raststeg. Zumeist ist eine Schrägflanke eines Sperrstiftes in Anlage an einem Raststeg. Die Schrägflanken werden beispielsweise durch kegelstumpfförmige Bereiche am freien Ende der Sperrstifte gebildet. Ein Sperrstift sperrt in einer Verschieberichtung. Ein anderer Sperrstift sperrt in der anderen Verschieberichtung.

Da im allgemeinen nur ein Sperrstift für die Arretierung einer Verschieberichtung verantwortlich, ist, wirken auf diesen einen Sperrstift und auf den entsprechenden Raststeg, an dem der Sperrstift anliegt, wirken bei einer unfallbedingten Belastung die gesamten Arretierungskräfte. Diese bewirken bei hoher Belastung ein durchaus gewolltes Verbiegen des Sperrstiftes, wie aus der eingangs genannten DE 197 09 149 A bekannt ist. Nach einem Verbiegen eines Sperrstiftes ändert sich nun aber der Winkel zwischen seiner Sperrflanke und dem Raststeg. Der Winkel wird größer. War er zuvor im Bereich der Selbsthemmung, ist er nun nach dem Verbiegen außerhalb dieses Bereichs. Es wird eine Kraft auf den Sperrstift ausgeübt, die ihn nach oben, also aus der Arretierung heraus, drückt. Es muss aber vermieden werden, dass der Sperrstift vom zugehörigen Raststeg frei kommt, weil sonst die Arretierung freigegeben wäre.

Hier setzt nun die Erfindung ein. Sie hat es sich zur Aufgabe gemacht, die Arretiereinrichtung der eingangs genannten Art dahin gehend weiter zu bilden, dass einem unfallbedingten Hochdrücken der Sperrstifte aus einer Arretierstellung heraus entgegen gewirkt wird.

Ausgehend von der Arretiereinrichtung der eingangs genannten Art wird diese Aufgabe gelöst durch die Merkmale des Patentanspruchs 1.

Das Führungsteil hat jeweils einen nach unten, also zur Rastenleiste hin vorragenden Vorsprung für jede der Stiftbohrungen. Die Vorsprünge verlängern die jeweilige Stiftbohrung.

Die Vorsprünge sind vorzugsweise ringförmig. In jedem Fall bewirken die Vorsprünge eine weichere, nachgiebigere Führung der Sperrstifte als im Bereich der Stiftbohrung des Führungsteils. Sie setzen sich also einem seitlichen Ausbiegen eines Sperrstiftes weniger entgegen als das Führungsteil.
Die Vorsprünge werden auch bei einer unfallbedingten Belastung ihrerseits verbogen. Insbesondere aber können sie sich mit dem Sperrstift verbiegen, verhaken und verkrallen. Dadurch wird in einer unfallbedingten Situation ein Herausdrücken der Sperrstifte aus ihrer Sperrstellung verhindert.

Die Erfindung ermöglicht es, das Führungsteil aus Stahl zu fertigen. Nach dem derzeitigem Stand der Technik werden die Führungsteile überwiegend aus Aluminium gefertigt. Die Führungslänge nach dem derzeitigen Stand der Technik ist deutlich größer als es die Erfindung ermöglicht. So ist, wie sich aus der eingangs genannten DE 197 09 149 A ergibt, die Führungslänge relativ groß, z. B. größer als 8 mm. Vorzugsweise wird für das Führungsteil nach der Erfindung ein Material mit einer Dicke von etwa 3 bis 4 mm, allgemein etwa zwischen 2 und 5 mm gewählt. Durch den Vorsprung wird die Länge der Stiftbohrung deutlich vergrößert, es kommen vorzugsweise 20 bis 120 % hinzu.

Vorzugsweise weist mindestens ein Sperrstift eine Rille auf, die sich in Nähe der zugehörigen Stiftbohrung, insbesondere des Vorsprunges, befindet. Die Rille wird auch als Crash-Rille bezeichnet. Im Bereich dieser Crash-Rille ist der Sperrstift geringfügig verjüngt, z.B. zwischen 5 und 15%, vorzugsweise etwa 8% verjüngt. Die Crash-Rille hat zudem zum freien Ende des Sperrstiftes hin vorzugsweise einen scharfkantigen Übergang zum ungestörten zylindrischen Mantel, bildet insbesondere dort eine Anschlagfläche aus.

Nun ist es zwar aus der eingangs genannten DE 197 07 149 A bekannt, im Führungsteil vor und hinter der Stiftbohrung Ausnehmungen, z.B. Sackbohrungen, Einschnitte usw. vorzusehen. Dadurch wird die plastische Verformung des Führungsteils in seinem unteren Teil erleichtert. Es werden aber keine Vorsprünge beschrieben, die von einer unteren Fläche der Führungsteiles nach unten vorspringen. Zudem wird keine Crash-Rille beschrieben, die in Eingriff mit einem Vorsprung gelangen kann.

In einer verbesserten Ausführung der Erfindung wird vorgeschlagen, die Vorsprünge als Durchzüge zu fertigen. Hierfür wird in das Führungsteil zunächst eine Vorbohrung für jede Stiftbohrung eingebracht, diese Vorbohrung hat einen deutlich kleineren Durchmesser als die fertige Stiftbohrung, beispielsweise 60% des Durchmessers der fertigen Stiftbohrung. Durch einen Stempel, dessen Außenabmessungen der Stiftbohrung entsprechen, wird nun die Vorbohrung vergrößert und dabei jeweils ein Vorsprung gebildet. Die Vorsprünge sind einstückig mit dem Führungsteil verbunden. In einer anderen Ausführung ist es möglich, die Vorsprünge durch separat eingesetztes Material, beispielsweise Gleithülsen, zu realisieren.

Als besonders vorteilhaft hat es sich erwiesen, in der Rastenleiste eine Sicke vorzusehen, die nach oben, zum Führungsteil hin gewölbt ist. Dadurch wird die Rastenleiste mechanisch ausgesteift und die Festigkeit einer Arretierung erhöht. Die Sicke kann beliebigen Querschnitt haben, beispielsweise halbkreisförmig, dreieckig, oder trapezförmig usw..

In einer besonders bevorzugten Ausbildung ist die Rille durch eine Mehrzahl einzelner Rillen ausgeführt. Beispielsweise sind drei etwa gleichabständige Einzelrillen nebeneinander vorgesehen. Vorzugsweise hat die mindestens eine Rille und haben die Einzelrillen einen kegelstumpfförmig verlaufenden Rillenboden, der sich zum freien Ende des Sperrstiftes hin verjüngt. Vorzugsweise wird eine Anschlagfläche am Ende jeder Rille bzw. Einzelrille, das zum freien Ende des Sperrteils weist, ausgebildet. Vorteilhafterweise haben die Sperrstifte an ihren freien Enden ein kurzes zylindrisches Frontende.

Aufgrund der Riffelung mit mehreren Einzelrillen wird einem impulsartigen oder auch langsam ablaufenden Hochdrücken des Sperrstiftes aus seiner Sperrstellung heraus wirksam entgegen gewirkt. Die mehreren Einzelrillen bieten eine Vielzahl von Verhakungs- und Verkrallungsmöglichkeiten, sobald der Sperrstift unfallbedingt etwas ausgebogen ist. Es stehen mehrere Einzelrillen zur Verfügung, die mit dem Material des Führungsteils am unteren Ende der Stiftbohrung wechselwirken können, wodurch eine Aufwärtsbewegung eines Sperrstiftes blockiert wird.

Die Riffelung bedeutet auch eine geringfügige lokale Schwächung der Sperrstifte, so dass sich diese bevorzugt im Bereich der Riffelung verbiegen. Dort aber bieten die Sperrstifte auch zugleich die größte Angriffsmöglichkeit für einen Anschlag an den Bereich um das untere Ende der Stiftbohrung.

Die Reduzierung des Durchmessers der Sperrstifte im Bereich der Riffelung wird einerseits so groß gewählt, dass eine ausreichend große Anschlagfläche vorliegt und damit eine gute mechanische Verhakung möglich ist, andererseits aber nicht so groß gewählt, dass der Sperrstift merklich geschwächt wird und unfallbedingt im Bereich der Riffelung brechen kann. Erwünscht ist eine gezielte Verformung im Bereich der Riffelung.

Die Ausbildung der Crashrille in Form mehrerer, nebeneinander angeordneter Einzelrillen hat den Vorteil, dass unter Last die Sperrstifte sich besser im Bereich der Vorsprünge mit diesen verhaken und verkrallen können. Dadurch werden dynamische Effekte beim Hochschnellen des Stiftes unter unfallbedingter Belastung verringert.

Schließlich hat es sich als vorteilhaft herausgestellt, zwar die Sperrstifte rund auszuführen, die Stiftbohrungen aber unrund auszubilden. Letzteres insbesondere im Bereich der Vorsprünge. Bei einer definierten Last können sich die Vorsprünge plastisch verformen. Hierdurch wird ein besseres Eingraben der Kanten der Rille bzw. Einzelrillen in den Vorsprung erreicht.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
Figur 1: Ein perspektivisches Montagebild einer Längsführung mit Sitzschiene und Bodenschiene, der eine Arretiereinheit mit vier Sperrstiften und einem Führungsteil zugeordnet ist,
Figur 2: eine Rückansicht entsprechend des Pfeils II in Figur 1 auf die in Figur 1 gezeigte Anordnung, nunmehr im montierten und zugleich auch im Eingriff befindlichen Zustand,
Figur 3: ein Schnittbild entlang der Linie III-III in Figur 2,
Figur 4: ein Detailbild in Ansicht wie Figur 2 eines im Eingriff befindlichen, unfallbedingt verbogenen Sperrstiftes, zur Erläuterung des Verkrallungseffektes,
Figur 5: eine Seitenansicht entsprechend Figur 2 eines weiteren Ausführungsbeispiels einer Arretiereinheit,
Figur 6: eine Ausführung ähnlich Figur 5, jedoch nun mit mehreren Einzelrillen, die gemeinsam die Crashrille bilden, an den Sperrstiften,
Figur 7: eine Untersicht eines Führungsteils mit unrunder Stiftbohrung und nicht runden Konturen im Bereich der Vorsprünge, das Führungsteil ist Teil eines L-förmigen Winkelprofils und
Figur 8: eine Darstellung eines verkrallten Sperrstiftes wie Figur 4, jedoch nunmehr mit mehreren Einzelrillen.

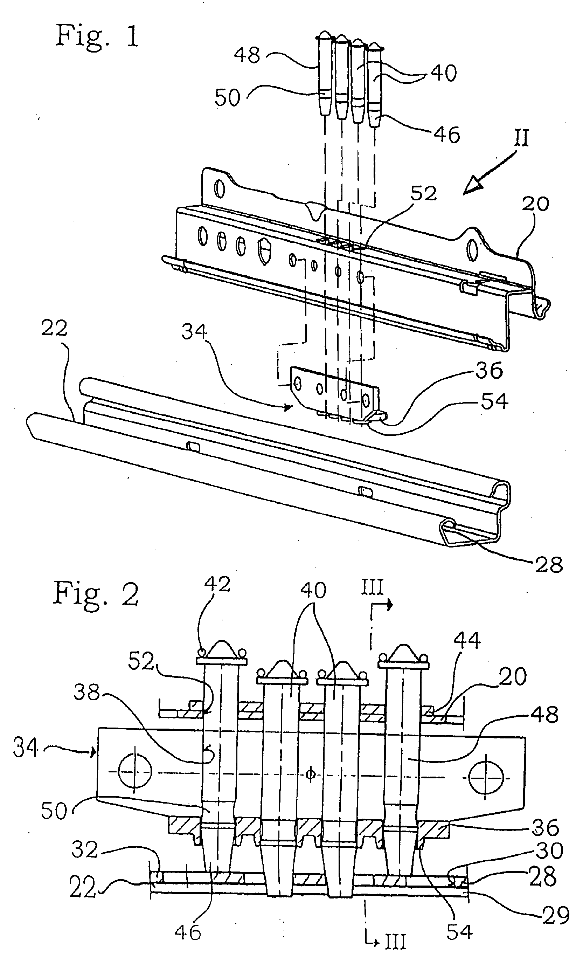

Im folgenden wird das erste Ausführungsbeispiel nach den Figuren 1 bis 4 beschrieben. Danach werden die weiteren Ausführungsbeispiele beschrieben, jedoch nur insoweit, als sie sich vom ersten Ausführungsbeispiel unterscheiden.

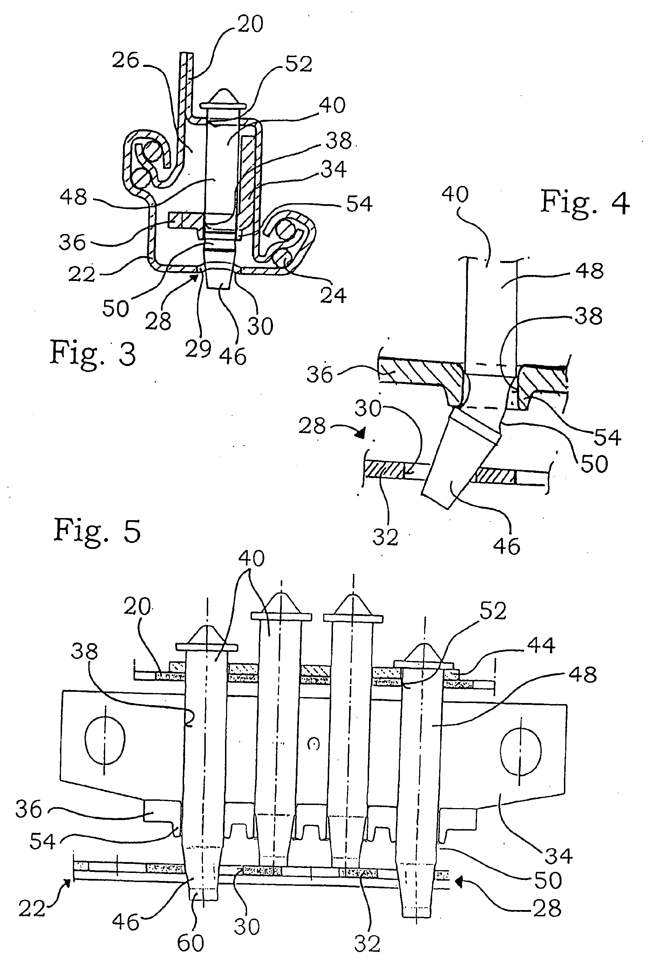

Die Figuren 1 bis 3 zeigen jeweils ein Schienenpaar bestehend aus einer Sitzschiene 20 und einer zugehörigen Bodenschiene 22. Die Schienen sind über geeignete Gleit- oder Wälzmittel, die hier als Kugeln 24 ausgeführt sind (siehe Figur 3), relativ gegeneinander verschiebbar. Die Sitzschiene 20 ist aus zwei Einzelprofilen zusammengefügt, wie insbesondere Figur 3 erkennen lässt. Die beiden Schienen 20, 22 begrenzen einen länglichen Hohlraum 26. Die Bodenschiene 22 ist an einem unteren Schenkel als Rastenleiste 28 ausgebildet, die sich in Schienenlängsrichtung erstreckt. Diese Rastenleiste 28 hat periodisch angeordnete Rastöffnungen 30, auch Fenster genannt, und Raststege 32. Wie insbesondere die Figuren 2 und 3 zeigen, befindet sich die Rastenleiste 28 in einer nach oben gebogenen Sicke 29. Das Material des unteren Flansches der Bodenschiene ist um etwa 1,5 bis 2 mm im Scheitelpunkt der Sicke 29 nach oben gebogen. Die Sicke 29 hat eine Breite, die etwa der Breite der Rastenleiste 28 entspricht. Der Versatz, den die Sicke 29 ausbildet, ist insbesondere in Figur 2 erkennbar. Durch die Sicke 29 wird die Rastenleiste 28 ausgesteift.

Im Hohlraum 26 befindet sich ein L-förmiges Winkelprofil 34, das mit einem vertikalen L-Schenkel an der Innenfläche eines vertikalen Flansches der Sitzschiene 20 befestigt ist. Ein freier Schenkel dieses Winkelprofils 34 bildet ein Führungsteil 36. In ihm sind vier Stiftbohrungen 38 vorgesehen. Jede Stiftbohrung 38 nimmt einen Sperrstift 40 auf, der im gezeigten Ausführungsbeispiel drehsymmetrisch ist. Die Sperrstifte 40 sind untereinander baugleich. Unrunde Stifte sind möglich, z. B. im Querschnitt quadratische Sperrstifte.

Die Sperrstifte werden durch eine Feder 42 individuell in eine Sperrposition vorbelastet, durch ein Löseteil 44 können sie gemeinsam in die Freigabestellung gezogen werden. Hierauf muss nicht im Einzelnen eingegangen werden, es wird auf die bereits erwähnte EP 498 932 B verwiesen.

Wie die Figuren zeigen, sind die Sperrstifte 40 etwas länger als die Höhe des Hohlraumes 46. Sie bleiben mit ihrem oberen Betätigungsbereich stets außerhalb der Sitzschiene 20 und greifen im arretierten Zustand in eine Rastöffnung 30 mit ihrem freien Ende ein.

In dem ersten Ausführungsbeispiel ist das untere, freie Ende der Sperrstifte 40 durch einen kegelstumpfförmigen Bereich 46 gebildet. Er geht an seinem oberen Ende über in einen zylindrischen Bereich 48. Dieser wird jedoch knapp oberhalb seines Beginns durch eine Rille 50, auch Crashrille genannt, unterbrochen. Im Bereich der Rille 50 ist der zylindrische Bereich 48 verjüngt. Insbesondere hat die Rille 50 an ihrem unteren Ende einen scharfkantigen Übergang zum ungestörten, zylindrischen Bereich 48, dies wird aus den weiteren Ausführungsbeispielen noch deutlicher.

Die Sperrstifte 40 sind zudem in einem oberen Schenkel der Sitzschiene 20 in Löchern geführt. Diese haben einen Abstand vom Führungsteil 36, der deutlich größer ist als die halbe Länge der Sperrstifte. Insgesamt ergibt sich eine wirksame Abstützung der Sperrstifte 40 über eine große Strecke, also einen großen Hebelarm.

Unterhalb jeder Stiftbohrung befindet sich ein Vorsprung 54, der die Stiftbohrung nach unten fortsetzt. Er ist bevorzugt als Durchzug ausgebildet, worauf später noch eingegangen wird, kann aber grundsätzlich in beliebiger Art realisiert werden. Er ist einstückig mit dem restlichen Führungsteil 36 verbunden und aus dessen Material herausgeformt. Er hat in Axialrichtung eine Länge, die etwa 60 % der Materialstärke des Führungsteils 36 ausmacht. In Radialrichtung sind die ringförmig ausgeführten Vorsprünge 54 relativ dünn, ihre Materialstärke liegt bei 1 bis 3 mm.

Wenn die Vorsprünge 54 in bevorzugter Ausführung als Durchzüge hergestellt werden, wird wie folgt vorgegangen: Zunächst werden am Ort der späteren Stiftbohrungen 38 Vorbohrungen durchgeführt, die z. B. etwa 60 % des Durchmessers der späteren Stiftbohrungen 38 haben. Dann wird durch diese Vorbohrung ein Werkzeug, insbesondere ein Stift, getrieben, der die Vorbohrung auf die Größe der Stiftbohrung 38 erweitert und am Austritt den Vorsprung 54 einschließlich des durch ihn verlängerten Teils der Stiftbohrung 38 bildet.

Für die Verkrallung wird im wesentlichen derjenige Teil des Vorsprungs benötigt, der sich betrachtet vom Mittelpunkt einer Stiftbohrung 38 in Längsrichtung der Schienen 20, 22 befindet. In Querrichtung hierzu kann der Vorsprung flacher sein.

Wie insbesondere die Figuren 2 bis 4 zeigen, befindet sich die Rille 50 für diejenigen Sperrstifte, die im Eingriff befindlich sind, etwas unterhalb des unteren Endes des zugehörigen Vorsprunges 54 und im Bereich dieses Vorsprunges. Dadurch wird erreicht, dass bei unfallbedingtem Hochdrücken des Sperrstiftes 40 und zusätzlicher Verbiegung (siehe Figur 4) eine untere Kante der Rille 50 in Anschlag an die in Verbiegungsrichtung benachbarte Kante des Vorsprungs 54 kommt. Dadurch ist das gewünschte Verhaken im Unfallzustand möglich. Die untere Begrenzung der Rille 50 ist vorzugsweise kantig bzw. verläuft etwa rechtwinklig zur Stiftachse. Dadurch wird eine möglichst große Anschlagfläche geschaffen, die ein Hochschnellen des Sperrstiftes 40 behindert.

Die Vorsprünge 54 befinden sich an der Unterfläche des Führungsteils 36 und in Nähe des Raststegs 32. Der Abstand zwischen Führungssteg 36 und Raststeg 32 ist etwas kleiner als die axiale Länge des kegelstumpfförmigen Bereiches 46.

Das Führungsteil 36 ist aus einem Stahl mit einer Streckgrenze von etwa 260 N/mm² gefertigt. Die Sperrstifte 40 sind ebenfalls aus Stahl, aber mit deutlich höherer Streckgrenze, beispielsweise 600 N/mm², hergestellt. Die Materialstärke des Führungsteils 36 liegt bei etwa 3,5 mm. Die Vorsprünge ragen etwa 2 mm nach unten vor und haben eine Wanddicke von etwa 1,5 mm. Durch die Vorsprünge 54 wird die Stiftführung weicher und länger. Die Sperrstifte 40 haben einen Durchmesser in ihrem zylindrischen Bereich 48 von etwa 7,5 mm. Die Stiftbohrung 38 ist ein Loch mit etwa 7,8 mm Innendurchmesser. Die Schienen 20, 22 sind aus einem sehr harten Stahl gefertigt, der eine noch höhere Streckgrenze als das Material der Sperrstifte 40 hat. Im Bereich der Crashrille 50 verjüngt sich der Durchmesser der Sperrstifte auf etwa 6,9 mm. Die axiale Länge der Rille 50 ist etwas kleiner als die axiale Länge der kompletten Stiftbohrung 38, also in Führungsteil 36 und Vorsprung 54.

In der Ausführung nach Figur 5 ist keine Rille vorgesehen. In Figur 5 ist der ganz rechts befindliche Sperrstift 40 voll eingerastet, er kann nicht tiefer greifen. Die beiden mittleren Sperrstifte 40 sind außer Eingriff. Der ganz links befindliche Sperrstift 40 ist im Eingriff, aber nicht vollständig nach unten ausgefahren, sodass noch eventuelles Spiel ausgeglichen werden kann. Auch in diesem Zustand ist wegen der Punktberührung zwischen dem Sperrstift und dem Vorsprung 54 im Falle einer unfallbedingten Verbiegung eine ausreichende Verhakung erreichbar.

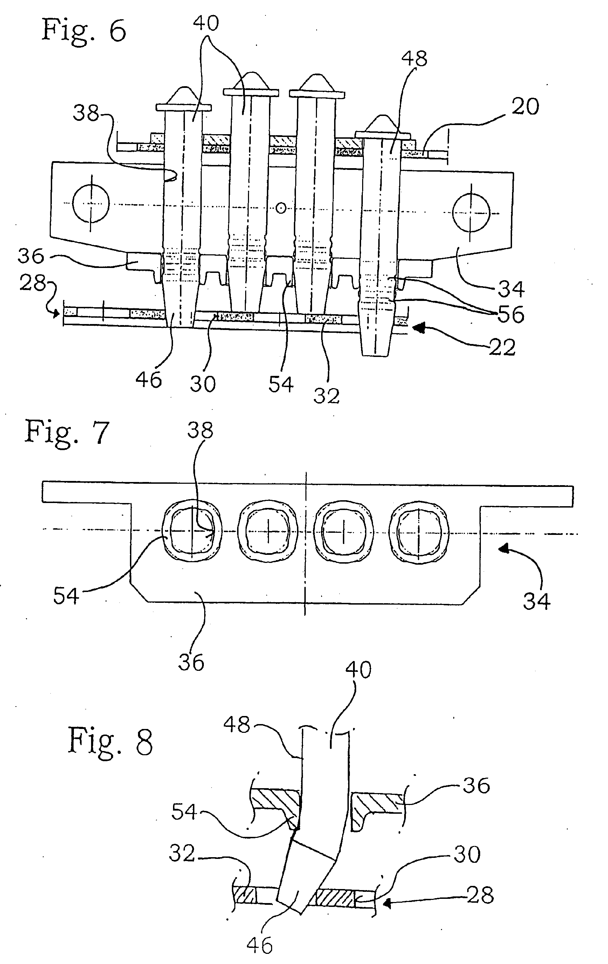

Figur 6 zeigt eine Ausbildung ähnlich Figur 5, jedoch ist nunmehr wieder eine Rille 50 vorgesehen und durch eine Anordnung mehrerer Einzelrillen 56 ausgebildet. Zwischen den Einzelrillen hat der Sperrstift 40 wieder den Durchmesser des zylindrischen Bereiches 48. Dadurch wird die Führung des Sperrstiftes 40 in der Stiftbohrung 38 verbessert. Durch die mehreren Einzelrillen 56 steht eine größere Auswahl an unteren Rillenkanten, mit denen der Vorsprung 54 in Eingriff kommen kann, zur Verfügung. Es wird auch die Stiftführung verbessert. In Figur 6 sind jeweils drei Einzelrillen 56 vorgesehen. Sie erstrecken sich über eine axiale Länge, die deutlich größer ist als die axiale Länge der einzigen Rille 50 in den vorausgegangenen Ausführungsbeispielen. Konkret erstrecken sie sich über etwa 70 % des Maximalhubes, den die Sperrstifte 40 ausführen können. Die Länge des Maximalhubes entspricht auch im wesentlichen der axialen Länge des kegenstumpfförmigen Bereiches 46.

Die Einzelrillen haben eine axiale Abmessung von z. B. 2 bis 4 mm. Zwischen zwei Einzelrillen bleibt ein ungestörter Bereich mit vollem Querschnitt von ca. 0,1 bis 3 mm axialer Abmessung.

Im Ausführungsbeispiel nach Figur 6 sind zudem die Stiftbohrungen 38 unrund, wie insbesondere Figur 7 zeigt. Die Stifte dagegen sind rund. Konkret sind die Querschnitte der Stiftbohrung 38 in Figur 7 etwa kissenförmig, sie kommen in Nähe eines Quadrates mit abgerundeten Ecken. Dadurch bleibt einerseits ausreichende Führungsfläche bestehen. Andererseits erhält man die Möglichkeit, dass eine plastische Deformation im Bereich um die Stiftbohrung 38 herum stattfinden kann. Diese plastische Deformation tritt bei einer definierten Last, wie sie unfallbedingt auftritt, ein. Es wird eine bessere Eingrabung der Rillenkanten ermöglicht.

Figur 8 zeigt schließlich ähnlich wie Figur 4 in verbogenen Zustand eines Sperrstiftes 40, wie er z.B. in der Ausführung nach Fig. 5 eingesetzt ist. Man erkennt, dass eine Verhakung zwischen dem Sperrstift und dem Vorsprung 54 erreicht ist.

Vorzugsweise ist der untere, freie Rand der Vorsprünge 54 scharfkantig. Vorzugsweise sind die Vorsprünge 54 gehärtet, z.B. einsatzgehärtet. Die Vorsprünge 54 sind insbesondere dort ausgebildet, wohin sich der Sperrstift verbiegen kann, also in Längsverstellrichtung. Quer hierzu, also quer zur Schienenlängsrichtung, können die Vorsprünge 54 entfallen, niedrig ausgebildet sein usw.

## Patentansprüche

1. Arretiereinrichtung einer Längsverstellvorrichtung eines Kraftfahrzeugsitzes, mit a) einer Rastenleiste (28), die periodisch angeordnete Rastöffnungen (30) und Raststege (32) aufweist und einer Bodenschiene (22) der Längsverstellvorrichtung zugeordnet ist sowie b) einer Sperreinheit, die einer Sitzschiene (20) der Längsverstellvorrichtung zugeordnet ist und die mindestens zwei, unabhängig von einander in Rastöffnungen (30) einrastbare und gemeinsam ausrastbare Sperrstifte (40) aufweist, welche in einem Führungsteil (36) angeordnet sind, das für jeden Sperrstift eine Stiftbohrung (38) aufweist und das (36) eine der Rastenleiste (28) zugewandte Fläche aufweist, **dadurch gekennzeichnet, dass** an dieser Fläche für jede Stiftbohrung (38) ein Vorsprung (54) angeordnet ist, der zur Rastenleiste (28) vorspringt, dass die Vorsprünge (54) sich bei einer unfallbedingten Belastung verbiegen, dass sich zwischen dem Vorsprung (54) einer Stiftbohrung (38) und dem Vorsprung (54) einer benachbarten Stiftbohrung (38) ein Bereich ohne Vorsprung befindet, und dass die Vorsprünge (54) die Stiftbohrungen (38) verlängern.

2. Arretiereinrichtung nach Anspruch 1, **dadurch gekennzeichnet, dass** die Vorsprünge (54) als Durchzüge gefertigt sind.

3. Arretiereinrichtung nach Anspruch 1, **dadurch gekennzeichnet dass** die Vorsprünge (54) ringförmig ausgebildet sind und eine axiale Länge aufweisen, die 20 bis 120% der Dicke des Führungsteils (36), vorzugsweise 50 bis 70% der Dicke des Führungsteils (36) beträgt.

4. Arretiereinrichtung nach Anspruch 1, **dadurch gekennzeichnet, dass** das Führungsteil (36) eine Materialstärke von zwei bis fünf mm, vorzugsweise drei bis vier mm, aufweist und aus Stahl gefertigt ist, dass die Sperrstifte ebenfalls aus Stahl gefertigt sind und dass das Material des Führungsteils (36) eine kleinere Streckgrenze aufweist, als das Material der Stifte, insbesondere eine etwa halb so große Steckgrenze wie das Material der Stifte (40) hat.

5. Arretiereinrichtung nach Anspruch 1, **dadurch gekennzeichnet, dass** das Führungsteil (36) von einem Flansch eines L-förmigen Winkelprofils (34) gebildet wird, dessen anderer Flansch mit der Sitzschiene (20) verbunden ist.

6. Arretiereinrichtung nach Anspruch 1, **dadurch gekennzeichnet, dass** die Sperrstifte (40) ein freies Ende und ein Betätigungsende aufweisen, dass das Führungsteil (36) näher dem freien Ende als dem Betätigungsende angeordnet ist, und dass ein Führungsblech vorgesehen ist, das Führungsöffnungen für die Sperrstifte (40) aufweist und sich in Nähe des Betätigungsendes der Sperrstifte (40) befindet.

7. Arretiereinrichtung nach Anspruch 1, **dadurch gekennzeichnet, dass** in der Rastenleiste (28) eine Sicke ausgebildet ist, in der das Material der Rastenleiste (28) nach oben zum Führungsteil (36) hin ausgeformt ist, insbesondere um etwa 1,5 bis 2 mm nach oben versetzt ist.

8. Arretiereinrichtung nach Anspruch 1, **dadurch gekennzeichnet, dass** mindestens ein Sperrstift (40) eine Rille (50) aufweist, die sich in Nähe der zugehörigen Stiftbohrung (38) befindet.

9. Arretiereinrichtung nach Anspruch 8, **dadurch gekennzeichnet, dass** der Sperrstift in Nähe seines freien Endes einen kegelstumpfförmigen Bereich (46) aufweist, dass sich an diesen kegelstumpfförmigen Bereich (46) ein längerer, zylindrischer Bereich (48) anschließt und dass sich die Rille (50) innerhalb dieses zylindrischen Bereichs (48), aber in unmittelbarer Nähe des kegelstumpfförmigen Bereichs (46) befindet.

10. Arretiereinrichtung nach Anspruch 8, **dadurch gekennzeichnet, dass** die Rille (50) durch mindestens zwei Einzelrillen (56) gebildet ist.

## Claims

1. A locking device of a longitudinal adjustment device of a vehicle seat provided with a) a catch bar (28) with periodically arranged snap openings (30) and snap studs (32) that is assigned to a bottom rail (22) of the longitudinal adjustment device and with b) a locking unit assigned to a seat rail (20) of the longitudinal adjustment device and provided with at least two locking pins (40) that are snappable into snap openings (30) independent of one another and jointly disengageable, said locking pins being arranged in a guide member (36) having a pin bore (38) for each locking pin, the guide member (36) is provided with an area facing the catch bar (28), **characterized in that** a projection (54) for each pin bore (38) projecting toward the catch bar (28) is arranged on said area, that the projections (54) are bended under crash load, that there is an area free of projection between the projection (54) of one pin bore (38) and the projection (54) of a neighboring pin bore (38), and the projections (54) extend as a continuation of the pin bores (38).

2. The locking device according to claim 1, **characterized in that** the projections (54) are configured as rimmed holes.

3. The locking device according to claim 1, **characterized in that** the projections (54) are annular and have an axial length amounting to 20 to 120 % of the thickness of the guide member (36), preferably 50 to 70 % of the thickness of the guide member (36).

4. The locking device according to claim 1, **characterized in that** the guide member (36) has a material thickness of two to five mm, preferably of three to four mm, and is made of steel, that the locking pins are made of steel as well and that the material of the guide member (36) has a lower yield point than the material of the pins, more specifically a yield point amounting to half of that of the material of the pins (40).

5. The locking device according to claim 1, **characterized in that** the guide member (36) is formed by a flange of an L-shaped angular section (34), the other flange of which is connected to the seat rail (20).

6. The locking device according to claim 1, **characterized in that** the locking pins (40) are provided with a free end and with an actuation end, that the guide member (36) is located nearer to the free end than to the actuation end and that a guide plate is provided that comprises guide apertures for the locking pins (40) and is located in proximity to the actuation end of the locking pins (40).

7. The locking device according to claim 1, **characterized in that** in the catch bar (28) there is formed a bead in which the material of catch bar (28) is shaped upward toward the guide member (36) and is more specifically offset upward by about 1.5 to 2 mm.

8. The locking device according to claim 1, **characterized in that** at least one locking pin (40) is provided with a groove (50) located in proximity to the corresponding pin bore (38).

9. The locking device according to claim 8, **characterized in that** the locking pin is provided with a truncated region (46) in proximity to the free end thereof, that a quite long, cylindrical region (48) is adjacent said truncated region (46) and that the groove (50) is located within said cylindrical region (48), but in immediate proximity to the truncated region (46).

10. The locking device according to claim 8, **characterized in that** the groove (50) is formed by at least two individual grooves (56).

## Revendications

1. Dispositif d'arrêt d'un dispositif de réglage longitudinal d'un siège de véhicule automobile, avec a) une barre à crans (28) qui présente des ouvertures d'arrêt (30) et des entretoises d'arrêt (32) disposées périodiquement et qui est associée à un rail de fond (22) dudit dispositif de réglage longitudinal, ainsi qu'avec b) une unité de blocage qui est associée à un rail de siège (20) du dispositif de réglage longitudinal et qui présente au moins deux goupilles de blocage (40) qui peuvent être enclenchées l'une indépendamment de l'autre dans des ouvertures d'arrêt (30) et désenclenchées en commun et qui sont disposées dans une pièce de guidage (36) laquelle présente un perçage de goupille (38) pour chacune des goupilles de blocage et laquelle (36) présente une face montrant vers la barre à crans (28), **caractérisé par le fait que** sur cette face est disposée une projection (54) pour chacun des perçages de goupille (38), qui est en saillie vers la barre à crans (28), que, dans le cas d'une charge qui est due à un accident, lesdites projections (54) se déforment, qu'une zone exempte de projection est située entre la projection (54) d'un perçage de goupille (38) et la projection (54) d'un perçage voisin de goupille (38), et que les projections (54) rallongent les perçages de goupille (38).

2. Dispositif d'arrêt selon la revendication 1, **caractérisé par le fait que** lesdites projections (54) sont réalisées comme excroissances.

3. Dispositif d'arrêt selon la revendication 1, **caractérisé par le fait que** lesdites projections (54) sont réalisées de façon annulaire et présentent une longueur axiale qui fait entre 20 et 120 % de l'épaisseur de la pièce de guidage (36), de préférence entre 50 et 70 % de l'épaisseur de la pièce de guidage (36).

4. Dispositif d'arrêt selon la revendication 1, **caractérisé par le fait que** ladite pièce de guidage (36) présente une épaisseur de matière comprise entre deux et cinq millimètres, de préférence entre trois et quatre millimètres et est réalisée en acier, que les goupilles de blocage sont réalisées, elles aussi, en acier et que le matériau de la pièce de guidage (36) présente une limite apparente d'élasticité plus faible que le matériau des goupilles, en particulier à peu près la moitié de la limite apparente d'élasticité du matériau des goupilles (40).

5. Dispositif d'arrêt selon la revendication 1, **caractérisé par le fait que** la pièce de guidage (36) est formée d'une aile d'une cornière en L (34) dont l'autre aile est reliée au rail de siège (20).

6. Dispositif d'arrêt selon la revendication 1, **caractérisé par le fait que** lesdites goupilles de blocage (40) présentent une extrémité libre et une extrémité de manoeuvre, que ladite pièce de guidage (36) est disposée plus près de l'extrémité libre que de l'extrémité de manoeuvre et qu'une tôle de guidage est prévue qui présente des ouvertures de guidage pour les goupilles de blocage (40) et qui est située à proximité de l'extrémité de manoeuvre des goupilles de blocage (40).

7. Dispositif d'arrêt selon la revendication 1, **caractérisé par le fait que** dans la barre à crans (28) est réalisée une moulure dans laquelle le matériau de la barre à crans (28) est déformé vers le haut en direction de la pièce de guidage (36), en particulier est décalé d'environ 1,5 à 2 mm vers le haut.

8. Dispositif d'arrêt selon la revendication 1, **caractérisé par le fait qu'**une goupille de blocage (40) au moins présente une cannelure (50) qui est située à proximité du perçage de goupille (38) associé.

9. Dispositif d'arrêt selon la revendication 8, **caractérisé par le fait que** ladite goupille de blocage présente, à proximité de son extrémité libre, une zone tronconique (46), que cette zone tronconique (46) est suivie d'une zone cylindrique de longueur plus importante (48) et que ladite cannelure (50) est située à l'intérieur de cette zone cylindrique (48), mais à proximité immédiate de la zone tronconique (46).

10. Dispositif d'arrêt selon la revendication 8, **caractérisé par le fait que** la cannelure (50) est formée d'au moins deux cannelures individuelles (56).
